(19) Europäisches Patentamt

European Patent Office

Office européen des brevets

(11) EP 1 565 252 B1

(12) EUROPEAN PATENT SPECIFICATION

(45) Date of publication and mention
of the grant of the patent:
**13.09.2006 Bulletin 2006/37**

(51) Int Cl.:
*B01D 53/94* *(2006.01)*      *B01J 29/18* *(2006.01)*

(21) Application number: **03775396.9**

(22) Date of filing: **27.11.2003**

(86) International application number:
**PCT/EP2003/013350**

(87) International publication number:
**WO 2004/047964 (10.06.2004 Gazette 2004/24)**

(54) **PROCESS FOR THE TREATMENT OF WASTE GAS AND UNIT SUITABLE FOR USE THEREIN**

VERFAHREN UND VORRICHTUNG ZUR BEHANDLUNG VON ABGASEN

PROCEDE POUR TRAITER DES GAZ RESIDUAIRES ET UNITE SERVANT A CETTE APPLICATION

(84) Designated Contracting States:
**AT BE BG CH CY CZ DE DK EE ES FI FR GB GR HU IE IT LI LU MC NL PT RO SE SI SK TR**

(30) Priority: **27.11.2002 EP 02079960**

(43) Date of publication of application:
**24.08.2005 Bulletin 2005/34**

(73) Proprietor: **Albemarle Netherlands B.V.
3818 LE Amersfoort (NL)**

(72) Inventors:
• **VAN ROOIJEN, Franciscus, Edwin
NL-3704 HK Zeist (NL)**
• **VOGT, Eelco, Titus, Carel
NL-4105 DW Culemborg (NL)**
• **NAT, Pieter, Jan
NL-1035 PP Amsterdam (NL)**

(74) Representative: **Rasser, Jacobus Cornelis
Howrey LLP
Rembrandt Tower
Amstelplein 1, 31st Floor
1096 HA Amsterdam (NL)**

(56) References cited:
**EP-A- 0 003 818**          **WO-A-95/15208**
**US-A- 6 004 896**

• **"Kirk-Othmer Encyclopedia of Chemical Technology. Fourth Edition. Volume 16" 1995 , JOHN WILEY & SONS , NEW YORK (USA) XP002271934 page 912 -page 913**

Remarks:
The file contains technical information submitted after the application was filed and not included in this specification

**Description**

The present invention pertains to a process for the treatment of waste gas. It also pertains to a unit suitable for use therein.

With increasingly stringent environmental regulations, the requirements as to the contaminant content of gaseous media, in particular gaseous media to be vented into the atmosphere, further indicated as waste gases, become ever more stringent. Accordingly, processes and apparatus are being developed to reduce the content of objectionable components in waste gases. Such removal can be carried out by adsorption using an adsorbent, by catalytic conversion, or by a combination of these two processes.

Waste gases from which undesired components are removed by using an adsorbent, via catalytic conversion, or by a combination of these processes include engine exhaust gases, in particular diesel and gasoline engine exhaust gas.

Diesel engines are equipped with an oxidation catalyst to control hydrocarbon, carbon monoxide, and part of the particulate emissions. However, these catalysts only function optimally above a certain temperature, indicated as the "light-off temperature", that is, the temperature above which the catalytic converter converts 50% of the incoming compound. Therefore, in diesel engines the catalyst is often preceded by an adsorbent, which acts to adsorb unburned fuel hydrocarbons at low exhaust gas temperatures, such as during cold start or partial engine load operation, and releases them when the catalyst has reached the higher light-off temperature to effect oxidation.
An additional use of adsorbents in diesel exhaust gas treatment is the following.

Inherent to the technology, diesel engines are operated at a high air-to-fuel ratio, which leads to relatively high $NO_x$ formation. Reduction of $NO_x$ to $N_2$ requires a temporarily fuel rich operation. WO 96/39244 of Johnson Matthey describes the use of an adsorbent in diesel engines, wherein the adsorbent adsorbs unburned fuel at lower temperature, and releases it at higher temperature. The release of unburned fuel causes a temporary increase in fuel concentration, which leads to increased conversion of $NO_x$ to $N_2$. $NO_x$ may be converted via $NO_x$ catalysts and $NO_x$ trap catalysts.

Conventional gasoline engines operate in fuel rich mode and the environmentally critical compounds, viz. hydrocarbons, CO, and $NO_x$ are oxidized and reduced, respectively, by today's standard three-way conversion catalyst systems (TWCs). Nevertheless, also in gasoline engines, cold start emissions can be reduced by in-line adsorbent devices as discussed above. Additionally, increased attention to fuel economy is leading to the development of fuel-lean gasoline engines, the exhaust characteristics of which are to a certain extent comparable to those of diesel engines, e.g., lower exhaust temperatures and increased $NO_x$ emissions. With this development, the adsorbents and catalysts applied for diesel emission reduction will also become attractive for gasoline exhaust applications.

Both in diesel and gasoline engines, when the exhaust temperature is high enough, the hydrocarbons in question will not be adsorbed on the adsorbent anymore, but pass directly to the catalyst(s). However, the exhaust gases, which by that time may reach temperatures of above 350°C, still encounter the adsorbent. For diesel operation, temperatures of above 350°C, more in particular between 450°C and 650°C, may be reached. For conventional gasoline operation, temperatures above 350°C, in particular of 500°C to 700°C, may be reached. For fuel-lean gasoline engines, the temperature is expected to be lower than for conventional gasoline engines. However, values above 350°C will still be reached.

In the art, zeolites are often used in the treatment of exhaust gases, as adsorbents or as catalyst components. The above-discussed WO 96/39244 mentions the use of ZSM-5, ion-exchanged or metal impregnated ZSM-5, silicalite, mordenite, zeolite Y and zeolite P as hydrocarbon adsorber.
US 5,849,255 describes a catalyst for trapping diesel exhaust hydrocarbons which contains a zeolite with an average pore diameter of greater than about 0.6 nm, a Si/Al ratio over 5, and retention of the crystalline structure at a temperature of 750-850°C in air. Zeolite beta, ultra-stable zeolite Y, and UTD-1 zeolite are mentioned as examples.
EP 0 499 931 describes the use of a zeolite Y with a SAR of 50 in particulate removal from diesel exhaust. US 2002-0114751 describes the use of a zeolite Y with a SAR of 50 loaded with a transition metal for this application. US 2002-0028169 describes the use of a zeolite Y with a SAR of 60 loaded with noble metal for this application.
US 6,407,032 describes a lean NOx trap comprising barium nitrate and a zeolite Y.
EP 0 020 799 and EP 0 003 818 disclose a process for treating exhaust gases from internal combustion engines by converting noxious components using a zeolite Y with a SAR of 4.5-35, preferably 4.5-9, a unit cell size of less than 24.45 A, and a sorptive capacity for water vapour (25°C, $p/p_0$ 0.19) of not greater than 12 wt%.

The zeolite used in an adsorbent should be able to adsorb the molecules in question at relatively low temperature, and release them at increasing temperature. Additionally, the adsorbent should be able to withstand the very high temperatures it meets when the engine has reached full operating temperature. As the adsorbent will be used for many years, this latter feature is of particular importance.
As indicated above, zeolites are also used in the catalysts used for treatment of exhaust gases, for example, in $NO_x$ conversion catalysts or in oxidation catalysts. Zeolites are also used in $NO_x$ trap catalysts, materials which trap $NO_x$ under lean fuel conditions and release them under fuel rich conditions for conversion into $N_2$. In these applications also, the temperature resistance of the catalyst is of importance for the same reason as given above.

The object of the present invention is therefore to provide a process for the treatment of waste gas, preferably engine exhaust gas, more preferably diesel or gasoline exhaust gas, wherein the waste gas is contacted with a zeolite Y with exceptional heat stability properties. Preferably, the zeolite additionally shows good catalytic and adsorbing properties.

The zeolite Y used in the process according to the invention has a unit cell size of 24.17-24.45 Å, a water adsorption capacity (p/p0 = 0.2, T=25°C) of at most 5 wt.%, and a bulk silica-alumina molar ratio (also called bulk or chemical SAR) of at least 40. The use of this type of zeolite in this application leads to an adsorbent/converter with high activity in combination with long life.

Preferably, the zeolite has a bulk SAR of at least 50, more preferably at least 60, and most preferably at least 70. The bulk SAR will generally be below 200, preferably below 170, more preferably below 140. If the bulk SAR of the zeolite is too low, the adsorption properties of the zeolite will be inadequate, while Y zeolites with a very high bulk SAR and good quality are difficult and therefore expensive to prepare.

The framework SAR of the zeolite is preferably at least 150, more preferably at least 200.

The zeolite Y has a unit cell size of 24.17-24.45 Å. Preferably, the unit cell size is at least 24.18 Å, more preferably at least 24.20 Å, still more preferably at least 24.23 Å, and most preferably at least 24.26 Å. The unit cell size preferably is at most 24.43 Å, more preferably at most 24.36 Å, still more preferably at most 24.33 Å. If the unit cell size is above the specified value, the selectivity of the zeolite for organic compounds will decrease. The preparation of zeolites with a very low unit cell size and good quality is a costly affair.

The zeolite to be used in the present invention has a water adsorption capacity (WAC) (determined at p/p0=0.2 and a temperature of 25°C) of at most 5 wt.%. Preferably, the water adsorption capacity is at most 3 wt.%, more preferably at most 2 wt.%, even more preferably at most 1.5 wt%.

It has been found that there is a strong correlation between the water adsorption capacity, the bulk SAR, and the stability of the zeolite at high temperatures. Therefore, the water adsorption capacity should be as low as possible, while the bulk SAR is as high as possible.

The WAC is determined as follows. The zeolite is pretreated to dry the material for 3 hours at 425°C, and then equilibrated at 25°C and a partial water vapour pressure of p/p0=0.2.

Another parameter which may be of relevance to the Y zeolites used in the treatment of exhaust gases is the residual butanol test value of the zeolite. This value, which is determined as described in GB 2,014,970, is a measure for the adsorption of 1-butanol in competition with water, and is a measure for the hydrophobicity of the zeolite. Zeolite powder is activated for 16 hours at 300°C and slurried in a 1-butanol solution in proportions such that the slurry contains one part by weight of 1-butanol, 100 parts by weight of water, and 10 parts by weight of activated zeolite Y. After gently shaking for 16 hours at 25°C, the supernatant liquid is analysed by gas chromatography. The residual butanol test value (RBT) is defined as the weight percentage of 1-butanol remaining in solution. It has been found that if the zeolite to be used in the present invention has a RBT of below 0.2, in particular below 0.17, more in particular below 0.15, still more in particular below 0.13, particularly attractive results are obtained.

Zeolites which meet the above requirements are known in the art. They are, e.g., described in US 4,401,566, GB 2,014,970, EP 320, 247, and WO 00/51940.

As indicated above, zeolites which meet the above requirements show a particularly high thermal stability under the high-temperature conditions which they periodically meet during use. Accordingly, they are particularly suitable for use in the treatment of waste gas according to the invention in processes where they are periodically subjected to temperatures above 350°C, more in particular in the treatment of engine exhaust gas, preferably diesel or gasoline exhaust gas, in processes where they are periodically subjected to temperatures above 350°C.

The zeolite's high thermal stability under the high-temperature conditions which it periodically meets during use can be seen from the relatively low decrease in micropore volume when the zeolite is subjected to steaming conditions which simulate the fast heating-up and long-term high temperature circumstances in engine exhaust systems.

The pore volume characteristics are obtained from the nitrogen adsorption isotherm at 78 K, which can be determined using commercially available equipment, e.g., Micromeritics A.S.A.P.-2400 or Gemini-2360. The adsorption $V_a$ at a relative pressure $P/P_0$ of 0.30 is interpolated from adjacent points on the adsorption isotherm. To calculate the micropore volume, the nitrogen adsorption isotherm in the range of $P/P_0$ = 0.08 to 0.80 is converted to a t-plot using the Harkins-Jura equation given by de Boer et al. (J. Colloid Interface Sci. Vol. 21 (1966), 405), with t standing for the thickness of the adsorbed layer.

$$t \, (\text{Å}) = \left( \frac{13.99}{0.034 - \log P/P_0} \right)^{\frac{1}{2}}$$

Since the t-plots of zeolites are slightly curved, the part of the plot used for determining the slope and the intercept has to be specified. In the present specification the range employed is from t is 3.5 Å to t is 5.3 Å. The straight line drawn through the points in this range with the aid of the least squares method has an intercept $V_{mi}$ and a slope $\Delta V_a/\Delta t$. The micro PV is calculated using the formula: micro PV (ml/g) = 0.001547 $V_{mi}$.

In one embodiment of the present invention, the zeolite functions as an adsorbent which adsorbs undesired compounds, in particular organic compounds, from waste gas at low temperature, e.g., below 120°C, and desorbs them at a higher temperature, e.g., above 120°C.
This goes in particular for adsorption of undesired components from engine exhaust gases, such as unburned fuel components. For diesel exhaust, the adsorption preferably takes place at a temperature below 120°C, while the desorption takes place at a temperature above 120°C. For conventional gasoline exhaust, the adsorption preferably takes place at a temperature below 170°C, while the desorption takes place at a temperature above 170°C. For lean fuel gasoline exhaust, the adsorption preferably takes place at a temperature below 120°C, while the desorption takes place at a temperature above 120°C.

In diesel exhaust, the desorbed hydrocarbons are led to an oxidation catalyst, to a $NO_x$ conversion catalyst, or to a $NO_x$ trap catalyst. In conventional gasoline exhaust, they are led to a TWC catalyst system. In lean-burn gasoline systems gases can be converted by a $NO_x$ conversion catalyst or captured in a $NO_x$ trap instead of TWC's. The above-mentioned zeolite can also be used in said oxidation catalysts, $NO_x$ conversion catalysts, and $NO_x$ trap catalysts.

For use as oxidation catalyst, the zeolite is preferably provided with noble metals such as platinum, palladium, or rhodium.
For use in a lean $NO_x$ catalyst, the zeolite is preferably provided with a noble metal of Group VIII of the periodic table of elements and/or with a non-noble metal of Group VIII of the periodic table of elements and/or with a metal of Group I. Noble Group VIII metals include platinum and palladium. Non-noble metals of Group VIII include nickel, cobalt, and iron. Copper is the most suitable metal of Group I.
For use in a $NO_x$ trap, the zeolite is preferably provided with an alkaline earth metal such as calcium, barium, or strontium. In this technology, $NO_x$ is first oxidised to $NO_2$ by catalytic metals useful for such oxidation, e.g., precious metals such as platinum, palladium, and rhodium. The $NO_2$ is then trapped on the surface of the catalyst in the form of a nitrate. The system is periodically operated under fuel rich conditions, which effect release of the $NO_x$ and conversion thereof into $N_2$. These catalysts are therefore preferably provided with noble metals as specified above, and a compound suitable to trap the nitrate, e.g., barium carbonate.

A combination of adsorption and catalytic conversion is also envisaged for the present invention. The present invention therefore also pertains to the use of a combination of an adsorbent and a catalyst in the treatment of waste gas, preferably engine exhaust gas, more preferably diesel or gasoline engine exhaust gas, wherein at least one of the adsorbent and the catalyst comprises the above-described zeolite. Accordingly, the present invention also pertains to a process for the treatment of exhaust gas from a diesel engine, wherein the engine exhaust system is provided with a hydrocarbon adsorbent and/or an oxidation catalyst and/or a $NO_x$ conversion catalyst, and/or a $NO_x$ trap catalyst, wherein the hydrocarbon adsorbent and/or the $NO_x$ conversion catalyst, and/or the $NO_x$ trap catalyst comprise a zeolite Y with the above properties. The present invention further pertains to a process for the treatment of exhaust gas from a gasoline engine, wherein the engine is provided with a hydrocarbon adsorbent and a TWC catalyst or $NO_x$ conversion catalyst and/or a $NO_x$ trap catalyst, wherein the hydrocarbon adsorbent and/or the $NO_x$ conversion catalyst, and/or the $NO_x$ trap catalyst comprise a zeolite Y with the above properties.

The zeolite is preferably used in the treatment of exhaust gases in the form of a thin layer on a monolithic carrier. Monolithic carriers are known in the art and include, e.g., the well-known honey-combs. The zeolite is applied onto the carrier in manners known in the art, e.g., by contacting the carrier with a slurry of the zeolite, followed by drying and calcining. This process is often indicated as preparing a wash-coat.

Accordingly, the present invention also pertains to a unit suitable for the treatment of exhaust gas as described above, which comprises a zeolite with the above-mentioned properties.
The unit preferably is a monolith at least part of the surface of which is coated with the zeolite. Optionally, the monolith can comprise one or more of the metal components indicated above.

EXAMPLE

The hydrothermal stability of zeolites Y1 to Y4 was determined by steaming the zeolites for 5 hours at 850°C under a flow of air containing 10 vol% $H_2O$.
The relative crystallinity was determined by taking the crystallinity of the zeolite after steaming relative to the crystallinity before steaming. The crystallinity of the zeolite was determined by measuring the XRD peak surfaces relative to an internal zeolite Y standard.

The relative crystallinity after steaming was taken as a measure for the hydrothermal stability: the higher the relative crystallinity, the higher the hydrothermal stability.

The relative crystallinity of the different zeolites is shown in Table I.

Zeolites Y1, Y2, and Y3, having a SAR in the range 4.5-35, a unit cell size of less than 24.45 Å, and a WAC of not greater than 12 wt%, are representative for the zeolites of EP 0 020 733 and EP 0 003 818.

Zeolite Y4 is a zeolite according to the present invention.

As can be seen from Table I, the zeolite according to the present invention has a higher heat stability than the zeolites representative for EP 0 020 733 and EP 0003818.

Table I

| Zeolite | Unit cell size (Å) | WAC ($p/p_0$=0.2, T=25°C) | Bulk SAR | Relative crystallinity (%) |
|---------|--------------------|---------------------------|----------|----------------------------|
| Y1 | 24.35 | 5.7 | 12 | 89 |
| Y2 | 24.33 | 4.6 | 16 | 91 |
| Y3 | 24.31 | 1.9 | 29 | 94 |
| Y4 | 24.29 | 1.3 | 56 | 99 |

**Claims**

1. A process for the treatment of waste gas wherein the waste gas is contacted with a zeolite Y which has a unit cell size of 24.17-24.45 Å and a water adsorption capacity ($p/p_0$= 0.2, T=25°C) of at most 5 wt.%, wherein the zeolite has a bulk silica-alumina molar ratio of at least 40 and a framework silica-alumina molar ratio of at least 150.

2. The process of claim 1 wherein the waste gas is engine exhaust gas, in particular exhaust gas from a diesel or gasoline engine.

3. The process of any of the preceding claims, wherein the zeolite functions as an adsorbent which adsorbs organic hydrocarbons at a low temperature and desorbs them at a higher temperature.

4. The process of claim 1 or 2 wherein the zeolite is part of an oxidation catalyst, the zeolite optionally comprising a noble metal of Group VIII of the periodic table of elements.

5. The process of claim 1 or 2 wherein the zeolite is part of a $NO_x$ reducing catalyst and/or of a $NO_x$ trap catalyst, the zeolite optionally comprising noble metal of Group VIII of the periodic table of elements and/or a non-noble metal of Group VIII of the periodic table and optionally an alkaline earth metal component such as barium.

6. A process for the treatment of exhaust gas from a diesel engine, wherein the engine exhaust system is provided with a hydrocarbon adsorbent and/or an oxidation catalyst and/or a $NO_x$ conversion catalyst and/or a $NO_x$ trap catalyst, wherein the hydrocarbon adsorbent and/or and or the oxidation catalyst and/or the $NO_x$ conversion catalyst and/or the $NO_x$ trap catalyst comprise a zeolite Y which has a unit cell size of 24.17-24.45 A, a water adsorption capacity ($p/p_0$ = 0.2, T=25°C) of at most 5 wt.% a bulk silica-alumina molar ratio of at least 40, and a framework silica-alumina molar ratio of at least 150.

7. The process of any of the preceding claims wherein the zeolite is periodically subjected to a temperature above 350°C.

8. A unit suitable for the treatment of exhaust gas according to any one of the preceding claims, which comprises a zeolite Y which has a unit cell size of 24.17-24.45 Å, a water adsorption capacity ($p/p_0$ = 0.2, T=25°C) of at most 5 wt.%, and a silica-alumina molar ratio of at least 40

9. The unit of claim 8 which comprises a monolith at least part of the surface of which is coated with the zeolite.

10. The unit of claim 8 or 9 which additionally comprises a Group VIII non-noble metal and/or a Group VIII noble metal, and/or an alkaline earth metal, and/or a Group I metal.

**Patentansprüche**

1. Verfahren zur Behandlung von Abgas, wobei das Abgas mit einem Y-Zeolithen in Kontakt gebracht wird, der eine Einheitszellgröße von 24,17 - 24,45 Å und eine Wasserabsorptionskapazität (p/p0 = 0,2, T = 25 °C) von höchstens 5 Gew.-% hat, wobei der Zeolith ein gesamtes Molarverhältnis von losem Siliciumdioxid/Aluminiumoxid von wenigstens 40 und ein Molarverhältnis von Gerüst-Siliciumdioxid/Aluminiumoxid von wenigstens 150 hat.

2. Verfahren nach Anspruch 1, wobei das Abgas ein Motorabgas, insbesondere ein Abgas von einem Diesel- oder Benzinmotor ist.

3. Verfahren nach einem der vorhergehenden Ansprüche, wobei der Zeolith als Adsorbens dient, das organische Kohlenwasserstoffe bei einer niedrigen Temperatur adsorbiert und sie bei einer höheren Temperatur desorbiert.

4. Verfahren nach Anspruch 1 oder 2, wobei der Zeolith Teil eines Oxidationskatalysators ist, wobei der Zeolith gegebenenfalls ein Edelmetall der Gruppe VIII des Periodensystems der Elemente umfasst.

5. Verfahren nach Anspruch 1 oder 2, wobei der Zeolith Teil eines reduzierenden $NO_x$-Katalysators und/oder eines $NO_x$-Speicherkatalysators ist, der Zeolith gegebenenfalls ein Edelmetall der Gruppe VIII des Periodensystems der Elemente und/oder ein Nicht-Edelmetall der Gruppe VIII des Periodensystems und gegebenenfalls eine Erdalkalimetallkomponente wie Barium umfasst.

6. Verfahren zur Behandlung eines Abgases aus einem Dieselmotor, wobei das Motor-Abgassystem mit einem Kohlenwasserstoff-Adsorbens und/oder einem Oxidationskatalysator und/oder einem $NO_x$-Umwandlungskatalysator und/oder einem $NO_x$-Speicherkatalysator versehen ist, wobei das Kohlenwasserstoff-Adsorbens und/oder der Oxidationskatalysator und/oder der $NO_x$-Umwandlungskatalysator und/oder der $NO_x$-Speicherkatalysator einen Y-Zeolithen umfasst, der eine Einheitszellgröße von 24,17 - 24,45 Å, eine Wasserabsorptionskapazität (p/p0 = 0,2, T = 25°C) von höchstens 5 Gew.-%, ein gesamtes Molarverhältnis von losem Siliciumdioxid/Aluminiumoxid von wenigstens 40 und ein Molarverhältnis von Gerüst-Siliciumdioxid/Aluminiumoxid von wenigstens 150 hat.

7. Verfahren nach einem der vorhergehenden Ansprüche, wobei der Zeolith einer Temperatur oberhalb von 350°C periodisch ausgesetzt wird.

8. Zur Behandlung eines Abgases geeignete Einheit nach einem der vorhergehenden Ansprüche, umfassend einen Y-Zeolithen, der eine Einheitszellgröße von 24,17 - 24,45 Å, eine Wasserabsorptionskapazität (p/p0 = 0,2, T = 25 °C) von höchstens 5 Gew.-% und ein Molarverhältnis von Siliciumdioxid/Aluminiumoxid von wenigstens 40 hat.

9. Einheit nach Anspruch 8, umfassend einen Monolithen, wobei wenigstens ein Teil dessen Oberfläche mit dem Zeolithen beschichtet ist.

10. Einheit nach Anspruch 8 oder 9, die zusätzlich ein Nicht-Edelmetall der Gruppe VIII und/oder ein Edelmetall der Gruppe VIII und/oder ein Erdalkalimetall und/oder ein Metall der Gruppe I umfasst.

**Revendications**

1. Procédé pour le traitement de gaz résiduaire dans lequel le gaz résiduaire est mis en contact avec une zéolite Y qui a une taille de maille unitaire de 24,17 - 24,45 Å et une capacité d'adsorption de l'eau (p/p0 = 0,2, T = 25°C) d'au plus 5 % en poids, dans lequel la zéolite a un rapport molaire silice - alumine dans la masse d'au moins 40 et un rapport molaire silice - alumine dans le squelette d'au moins 150.

2. Procédé selon la revendication 1 dans lequel le gaz résiduaire est un gaz d'échappement de moteur, en particulier un gaz d'échappement d'un moteur diesel ou à l'essence.

3. Procédé selon l'une quelconque des revendications précédentes, dans lequel la zéolite fonctionne comme un adsorbant qui adsorbe des hydrocarbures organiques à une faible température et les désorbe à une température supérieure.

4. Procédé selon la revendication 1 ou 2 dans lequel la zéolite fait partie d'un catalyseur d'oxydation, la zéolite comprenant de manière optionnelle un métal noble du groupe VIII du tableau périodique des éléments.

5. Procédé selon la revendication 1 ou 2 dans lequel la zéolite fait partie d'un catalyseur de réduction des NO$_x$ et / ou d'un catalyseur de piégeage des NO$_x$, la zéolite comprenant de manière optionnelle un métal noble du groupe VIII du tableau périodique des éléments et / ou un métal non noble du groupe VIII du tableau périodique et de manière optionnelle un composant métallique alcalino-fierreux tel que lebaryum.

6. Procédé pour le traitement de gaz d'échappement d'un moteur diesel, dans lequel le système d'échappement du moteur est muni d'un adsorbant d'hydrocarbures et / ou d'un catalyseur d'oxydation et / ou d'un catalyseur de conversion des NO$_x$ et / ou d'un catalyseur de piégeage des NO$_x$, dans lequel l'adsorbant d'hydrocarbures et / ou le catalyseur d'oxydation et / ou le catalyseur de conversion des NO$_x$ et / ou le catalyseur de piégeage des NO$_x$ comprend une zéolite Y qui a une taille de maille de 24,17 - 24,45 Å, une capacité d'adsorption de l'eau (p/p0 = 0,2, T = 25°C) d'au plus 5 % en poids, un rapport molaire de silice - alumine dans la masse d'au moins 40 et un rapport molaire de silice - alumine dans le squelette d'au moins 150.

7. Procédé selon l'une quelconque des revendications précédentes dans lequel la zéolite est soumise de manière périodique à une température supérieure à 350 °C.

8. Unité appropriée pour le traitement des gaz d'échappement selon l'une quelconque des revendications précédentes, qui comprend une zéolite Y qui a une taille de maille de 24,17 - 24,45 Å, une capacité d'adsorption de l'eau (p/p0 = 0,2, T = 25°C) d'au plus 5 % en poids, un rapport molaire de silice - alumine dans la masse d'au moins 40.

9. Unité selon la revendication 8 qui comprend un monolithe dont au moins une partie de la surface est revêtu avec la zéolite.

10. Unité selon la revendication 8 ou 9 qui comprend de manière supplémentaire un métal non noble du groupe VIII et / ou un métal noble du groupe VIII et / ou un métal alcalino-terreux et / ou un métal du groupe I.